# EUROPÄISCHE PATENTSCHRIFT

(11) **EP 3 569 334 B1**
(45) Veröffentlichungstag und Bekanntmachung des Hinweises auf die Patenterteilung: **04.11.2020**
(21) Anmeldenummer: 19174262.6
(22) Anmeldetag: 14.05.2019
(51) Int. Cl.: B22F 3/105, B33Y 10/00, B22F 3/16, B23P 9/04, B24B 39/06, B23P 9/00, B23P 15/00, B23P 17/00, B33Y 30/00, B23P 23/00

(54) **VERFAHREN ZUR HERSTELLUNG EINES BAUTEILS**
METHOD FOR PRODUCING A COMPONENT
PROCÉDÉ DE FABRICATION D'UN COMPOSANT

(30) Priorität: 15.05.2018 DE 102018207520
(43) Veröffentlichungstag der Anmeldung: 20.11.2019
(73) Patentinhaber: Airbus Defence and Space GmbH, 82024 Taufkirchen (DE)
(72) Erfinder: Silvanus, Jürgen, 82008 Unterhaching (DE)

(56) Entgegenhaltungen:
- EP-A2- 2 090 396
- CN-A- 107 671 288
- US-A1- 2011 293 840
- US-A1- 2016 175 982
- US-A1- 2017 326 681
- US-A1- 2018 050 418

## Beschreibung

Die vorliegende Erfindung betrifft ein Verfahren zur Herstellung eines Bauteils, insbesondere eines Strukturbauteils für ein Luft- oder Raumfahrzeug.

Bei generativen bzw. additiven Fertigungsverfahren, auch allgemein als "3D-Druckverfahren" bezeichnet, werden ausgehend von einem digitalisierten geometrischen Modell eines Objekts ein oder mehrere Ausgangsmaterialien sequentiell in Lagen übereinandergeschichtet und erstarrt oder ausgehärtet. Das sogenannte Auftragsschweißen, welches häufig zur Oberflächenbeschichtung eingesetzt wird, kann ebenfalls als additives Fertigungsverfahren eingesetzt werden. Hierbei wird ein Metallmaterial als Ausgangsmaterial verwendet, wobei die einzelnen Schichten üblicherweise in geschmolzener, flüssiger Form aufgetragen werden. Dadurch kommt es beim Auftragen einer neuen Schicht auf eine bereits hergestellte Schicht zu großem Wärmeeintrag in diese bereits hergestellte und erstarrte Schicht, was zu einem Kornwachstum in der Kristallstruktur des Metallmaterials dieser Schicht führen kann.

Jianglong Gu et al. beschreiben in dem Artikel "Deformation microstructures and strengthening mechanisms for the wire+arc additively manufactured Al-Mg4.5Mn alloy with inter-layer rolling" (Materials Science and Engineering: A, Volume 712, 2018, Seiten 292-301) ein Verfahren zu Herstellung eines Bauteils, bei welchem vor der Erzeugung einer weiteren Bauteilsicht eine zuletzt hergestellt Bauteilschicht gewalzt wird, um die mechanischen Eigenschaften des Bauteils zu verbessern.

Die US 2011/0293840 A1 beschreibt ein Verfahren zur Herstellung eines Bauteils, bei dem eine Metallschicht durch ein "Direct Metal Deposition (DMD)" Verfahren erzeugt wird und die erzeugte Schicht anschließend, vor dem Auftragen einer weiteren Schicht auf die erzeugte Schicht, mit einem Reibstift bearbeitet wird, um die Mikrostruktur der erzeugten Schicht zu verändern.

Ferner wird in der CN 107 671 288 A ein Rührreibverfahren zur Nachbearbeitung von Bauteilen beschrieben, die mittels eines additiven Herstellungsverfahrens hergestellt wurden.

Es ist Aufgabe der vorliegenden Erfindung, ein verbessertes Verfahren zur additiven oder generativen Herstellung eines Bauteils bereitzustellen.

Diese Aufgabe wird durch ein Verfahren mit den Merkmalen des Anspruchs 1 gelöst.

Gemäß diesem Verfahren wird ein Bauteil durch sequentielles übereinanderschichten von Lagen aus Metallmaterial erzeugt, wobei die einzelnen Lagen oder Schichten aus einem sich oberhalb seiner Schmelztemperatur befindlichen Metallmaterial erzeugt werden. Eine Oberfläche einer zuletzt erzeugten Bauteilschicht bildet hierbei eine Basisoberfläche, auf welcher die nachfolgende Bauteilschicht erzeugt wird. Da das Metallmaterial, aus welchem die nachfolgende Bauteilschicht erzeugt wird, sich oberhalb seiner Schmelztemperatur befindet, kommt es über die Basisoberfläche zu einem großen Wärmeeintrag in die darunterliegende Bauteilschicht.

Ein der Erfindung zugrundeliegender Gedanke besteht darin, eine mechanische Bearbeitung einer Außenoberfläche einer erstarrten, zuletzt erzeugten Bauteilschicht, auf welcher die weitere Bauteilschicht erzeugt wird, vorzunehmen, um Versetzungen in das Kristallgitter der zuletzt erzeugten Bauteilschicht einzubringen. Die Versetzungen erleichtern eine Verteilung der eingetragenen Wärme in der Bauteilschicht und hemmen das Kornwachstum des Metallmaterials infolge des Wärmeintrags. Dies führt zu einer deutlich verbesserten mechanischen Festigkeit des erzeugten Bauteils. Erfindungsgemäß wird die mechanische Bearbeitung mittels eines rotierenden Reibstifts durchgeführt. Dieser wird an die Außenoberfläche angedrückt bzw. in diese eingedrückt und fährt die Außenoberfläche vollflächig ab. Dadurch werden mittels des rotierenden Stifts vollflächig Scherspannungen in die zuletzt erzeugte Bauteilschicht eingebracht, wodurch Versetzungen im Kristallgitter dieser Schicht erzeugt werden.

Mittels des rotierenden Reibstifts, der gegen die Außenoberfläche drückt, werden große Flächenpressungen erreicht, wodurch die Scherspannungen auf einfache und effiziente Weise in die Oberfläche eingebracht werden. Insbesondere kann die Anzahl der Arbeitsgänge, also wie oft der Reibstift über einen Bereich der Außenoberfläche bewegt werden muss, um einen gewünschten Spannungseintrag zu erzielen, im Vergleich zu einem Walzen der Oberfläche reduziert werden, beispielweise auf einen einzigen Arbeitsgang. Dadurch wird das Verfahren vorteilhaft beschleunigt. Ein weiterer Vorteil liegt darin, dass durch die verbesserte Wärmedissipation in die bestehende Bauteilschicht, die neu erzeugte Bauteilschicht schneller und mit homogeneren Korngrößen erstarrt, wodurch die mechanische Festigkeit verbessert wird. Ferner wird durch das Einbringen von Scherspannungen mit einem rotierenden Reibstift der maschinelle Aufwand des Verfahrens verringert, da sich der Reibstift in einfacher Weise automatisiert entlang der Oberfläche führen lässt, beispielsweise mittels eines Manipulators eines Industrieroboters.

Erfindungsgemäß verläuft die Drehachse des Reibstifts quer zu der Außenoberfläche der Bauteilschicht und der Reibstift wird mit einer sich quer zur Drehachse erstreckenden Stirnfläche an die Außenoberfläche der Bauteilschicht angedrückt. Demnach wirkt die Kraft, mit der der Reibstift an die Außenoberfläche angedrückt wird, entlang der Rotationsachse und der Reibstift wird quer zu seiner Rotationsachse entlang der Außenoberfläche bewegt. Insbesondere kann die Rotationsachse senkrecht zu der Außenoberfläche stehen oder leicht geneigt zu dieser verlaufen, beispielsweise um einen Winkel zwischen 1 Grad und 10 Grad. Auf diese Weise werden mit einer verglichen mit Walzverfahren geringen Andrückkraft hohe Flächenpressungen erzielt.

Die Stirnfläche des Reibstifts weist im Bereich der Drehachse eine Ausnehmung und einen die Ausnehmung umschließenden Anlagebereich auf, welcher an die Außenoberfläche der Bauteilschicht angedrückt wird. Die Ausnehmung kann insbesondere als eine Vertiefung der Stirnfläche ausgebildet sein. Alternativ kann die Ausnehmung auch eine den Reibstift entlang der Rotationsachse insgesamt durchdringende Durchgangsöffnung sein. Das Vorsehen einer Ausnehmung im Bereich der Drehachse an der Stirnfläche bietet den Vorteil, dass lediglich ein schmaler in Bezug auf eine radiale Richtung äußerer Bereich an die Außenoberfläche des Bauteils angedrückt wird, wodurch Geschwindigkeitsunterschiede in radialer Richtung des Anlagebereichs verringert werden. Dies führt zu einer noch gleichmäßigeren Einbringung von Scherspannungen, was sich günstig auf die mechanische Festigkeit des Bauteils auswirkt.

Erfindungsgemäß ist der Anlagebereich der Stirnfläche ringförmig ausgebildet.

Hierbei ist der Anlagebereich als eine die Rotationsachse des Reibstifts konzentrisch umschließende Ringfläche ausgebildet.

Vorteilhafte Ausgestaltungen und Weiterbildungen ergeben sich aus den auf Anspruch 1 rückbezogenen Unteransprüchen in Verbindung mit der Beschreibung.

Gemäß einer Ausführungsform des Verfahrens wird nach Schritt c) der Schritt b) wiederholt. Demnach wird nach der Erzeugung einer weiteren Bauteilschicht auch die Außenoberfläche der zuletzt erzeugten Schicht mittels des rotierenden Stifts behandelt. Insbesondere kann dies auch für eine letzte, in Bezug auf eine Aufbaurichtung des Bauteils äußerste Schicht erfolgen, auf welcher keine weitere Bauteilschicht mehr erzeugt wird. Dies ist günstig für eine optionale anschließende Wärmebehandlung des Bauteils. Somit wird die mechanische Festigkeit des Bauteils weiter verbessert.

Gemäß einer Ausführungsform des Verfahrens ist der Reibstift aus demselben Metallmaterial ausgebildet wie die Bauteilschicht, wobei die Kraft, mit welcher der Reibstift an die Außenoberfläche der Bauteilschicht angedrückt wird, derart gewählt ist, dass das Metallmaterial des Reibstifts in einem Kontaktbereich mit der Außenoberfläche der Bauteilsicht plastifiziert und auf die Außenoberfläche der Bauteilschicht aufgetragen wird. Gemäß dieser Weiterbildung des Verfahrens wird der Reibstift während der mechanischen Behandlung der Außenoberfläche anschaulich gesprochen verbraucht. Durch die infolge des Andrückens unter gleichzeitiger Rotation entstehende Reibungswärme werden das Metallmaterial des Reibstifts und das Metallmaterial der Bauteilschicht in einen plastischen Zustand versetzt. Dadurch wird Metallmaterial von dem Reibstift abgerieben und legt sich an die Oberfläche der Bauteilschicht an bzw. wird stoffschlüssig mit dieser verbunden. Somit erfolgt gleichzeitig mit dem Einbringen von Scherspannungen ein Auftragen von Material, wodurch die Herstellungsgeschwindigkeit des Bauteils weiter erhöht wird.

Gemäß einer Ausführungsform des Verfahrens liegt die Kraft, mit welcher der Reibstift an die Außenoberfläche der Bauteilschicht angedrückt wird, in einem Bereich zwischen 0,5 Kilonewton und 10 Kilonewton. In diesem Bereich werden Scherspannungen besonders gleichmäßig erzeugt. Insbesondere kann die Kraft, mit welcher der Reibstift an die Außenoberfläche der Bauteilschicht angedrückt wird, in einem Bereich zwischen 4 Kilonewton und 8 Kilonewton liegen, vorzugsweise zwischen 5 und 7 Kilonewton.

Gemäß einer weiteren Ausführungsform wird der Reibstift mit einer Drehzahl in einem Bereich zwischen 100 Umdrehungen pro Minute und 10000 Umdrehungen pro Minute um die Rotationsachse rotiert. In diesem Bereich werden Scherspannungen besonders gleichmäßig erzeugt.

Gemäß einer weiteren Ausführungsform des Verfahrens wird das Metallmaterial zur Erzeugung der Bauteilschicht in einem flüssigen Zustand auf die Basisoberfläche aufgetragen und dort in einen festen Zustand überführt. Demnach erfolgt eine Erzeugung der Bauteilschichten nach Art des Auftragsschweißens. Insbesondere kann die Erzeugung der Bauteilschicht durch das Aufschmelzen eines über der Basisoberfläche gehaltenen Drahts aus dem Metallmaterial erfolgen. Beispielsweise kann der Draht mit einer elektrischen Spannung beaufschlagt und in Richtung der Basisoberfläche bewegt werden, bis sich ein Kurzschluss bildet. Nach dem Einstellen des Stromflusses wird rechnergesteuert die Stromzufuhr unterbrochen und der Schweißdraht wird in die entgegengesetzte Richtung zurück bewegt. Dadurch wird das Metallmaterial tröpfchenweise aufgetragen. Das Überführen in den festen Zustand kann beispielsweise durch eine aktive Kühlung mittels eines Kühlluftstroms oder durch eine Durchführung des Verfahrens bei Raumtemperatur, also in einem Temperaturbereich zwischen 10 Grad Celsius und 50 Grad Celsius erfolgen.

Gemäß einer weiteren Ausführungsform des Verfahrens, ist das Metallmaterial eine Titanlegierung, eine Aluminiumlegierung, eine Nickellegierung oder eine Stahllegierung ist. Es können also die Bauteilschichten und/oder der Reibstift aus einem dieser Materialen ausgebildet sein.

Gemäß einer weiteren Ausführungsform erfolgt das Erzeugen der Bauteilschicht mit einer Aufbaugeschwindigkeit von größer oder gleich ein Kilogramm Metallmaterial pro Stunde. Insbesondere kann das Erzeugen der Bauteilsicht mit einer Aufbaugeschwindigkeit zwischen 1 Kilogramm Metallmaterial pro Stunde und 3 Kilogramm Metallmaterial pro Stunde erfolgen. Dadurch können auch große Bauteile mit hoher mechanischer Festigkeit hergestellt werden.

Gemäß einer weiteren Ausführungsform wird nach der Erzeugung der Bauteilschichten eine zerspanende Bearbeitung des Bauteils durchgeführt. Beispielsweise kann nach der Herstellung aller Bauteilschichten ein Frässchritt durchgeführt werden, in welchem das Bauteil seine abschließende äußere Form erhält.

Gemäß einer weiteren Ausführungsform wird nach der Erzeugung der Bauteilschichten eine Wärmebehandlung durchgeführt. Beispielsweise kann das Bauteil nach der Herstellung aller Bauteilschichten in einem Wärmeofen einem vorbestimmten zeitlichen Temperaturverlauf ausgesetzt werden. Insbesondere kann ein Spannungsarmglühen erfolgen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Im Folgenden wird die Erfindung unter Bezugnahme auf die Figuren der Zeichnungen erläutert. Von den Figuren zeigen:
- Fig. 1: ein Erzeugen einer flächigen Bauteilschicht in einem Schritt eines Verfahrens gemäß einem Ausführungsbeispiel der vorliegenden Erfindung;
- Fig. 2: ein Einbringen von Scherspannungen in eine Bauteilschicht in einem weiteren Schritt des Verfahrens gemäß einem Ausführungsbeispiel der vorliegenden Erfindung;
- Fig. 3: eine Draufsicht auf die in Fig. 2 gezeigte Bauteilschicht während des Einbringens der Scherspannungen;
- Fig. 4: eine Detailansicht des in Fig. 2 durch den Buchstaben Z gekennzeichneten Bereichs;
- Fig. 5: ein Erzeugen einer weiteren flächigen Bauteilschicht in einem weiteren Schritt eines Verfahrens gemäß einem Ausführungsbeispiel der vorliegenden Erfindung;
- Fig. 6: ein Einbringen von Scherspannungen in eine Bauteilschicht in einem weiteren Schritt des Verfahrens gemäß einem Ausführungsbeispiel der vorliegenden Erfindung;
- Fig. 7: ein Einbringen von Scherspannungen in eine Bauteilschicht in einem Schritt des Verfahrens gemäß einem weiteren Ausführungsbeispiel der vorliegenden Erfindung;
- Fig. 8: eine Detailansicht eines Endabschnitts eines Reibstifts zur Einbringung von Scherspannungen in eine Bauteilschicht gemäß einem Ausführungsbeispiel der vorliegenden Erfindung;
- Fig. 9: eine Detailansicht eines Endabschnitts eines Reibstifts zur Einbringung von Scherspannungen in eine Bauteilschicht gemäß einem weiteren Ausführungsbeispiel der vorliegenden Erfindung; und
- Fig. 10: eine schematische Ansicht einer Wärmebehandlung eines Bauteils in einem Schritt des Verfahrens gemäß einem weiteren Ausführungsbeispiel der vorliegenden Erfindung.

In den Figuren bezeichnen dieselben Bezugszeichen gleiche oder funktionsgleiche Komponenten, soweit nichts Gegenteiliges angegeben ist.

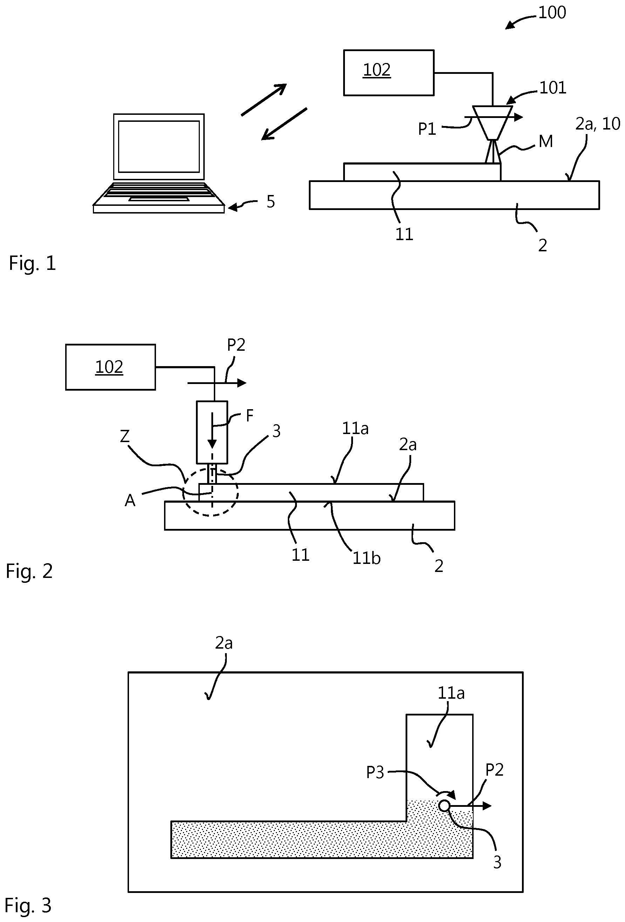

Fig. 1 zeigt einen ersten Schritt eines Verfahrens zur Herstellung eines Bauteils 1. In diesem Schritt wird eine flächige Bauteilschicht 11 auf einer Basisoberfläche 10 erzeugt. Wie in Fig. 1 schematisch dargestellt ist, erfolgt die Erzeugung des Bauteils 1 aufbauend auf einem digitalisierten Model des Bauteils 1. Dieses Bauteilmodell enthält als Daten insbesondere die äußere Gestalt des Bauteils 1 definierende Abmessungen sowie Informationen zur Durchführung der im Folgenden näher erläuterten Verfahrensschritte. Von einem Rechner 5 kann das Modell des Bauteils 1 als Datensatz an eine Fertigungsstation 100 übermittelt werden bzw. der Rechner 5 kann die Fertigungsstation 100 auf Basis des Modells steuern.

In Fig. 1 ist schematisch eine Fertigungsstation 100 gezeigt, welche eine Materialauftragsvorrichtung 101 und einen Manipulator 102 aufweist, an welchen die Materialauftragsvorrichtung 101 gekoppelt ist und durch welchen die Materialauftragsvorrichtung 101 auf Basis des Datensatzes bewegbar ist. Die Materialauftragsvorrichtung 101 kann insbesondere als eine Schweißvorrichtung ausgebildet sein, mittels derer ein Metalldraht aufschmelzbar und auf eine Oberfläche auftragbar ist.

Wie in Fig. 1 gezeigt, wird eine erste Bauteilschicht 11 auf einer Basisoberfläche 10 erzeugt. Die Basisoberfläche 10 kann hierbei insbesondere durch eine Oberfläche 2a einer Trägerplatte 2 gebildet sein. Die Bauteilschicht 11 wird aus einem sich oberhalb seiner Schmelztemperatur befindlichen Metallmaterial M erzeugt. Dies kann insbesondere dadurch erfolgen, dass das Metallmaterial mittels der Materialauftragsvorrichtung 101 verflüssigt und in einem flüssigen Zustand auf die Basisoberfläche 10 aufgetragen wird, wo das Metallmaterial M erstarrt. Um eine flächige Erstreckung der Bauteilschicht 11 zu erzeugen, wird die Materialauftragsvorrichtung 101 mit Hilfe des Manipulators 102 entlang der Basisoberfläche 10 entsprechend dem Datensatz des Bauteilmodells bewegt, wie dies in Fig. 1 durch den Pfeil P1 symbolisch dargestellt ist.

Die Materialauftragsvorrichtung 101 kann insbesondere derart gesteuert werden, dass zumindest ein Kilogramm Metallmaterial M pro Stunde auf die Basisoberfläche 10 aufgebracht wird. Die Steuerung der Materialauftragsvorrichtung 101 erfolgt hierbei ebenfalls auf Basis der Daten des Bauteilmodells. Die Bauteilschicht 11 kann also insbesondere mit einer Aufbaugeschwindigkeit von größer oder gleich ein Kilogramm Metallmaterial M pro Stunde erfolgen.

Das Metallmaterial M kann insbesondere eine Titanlegierung, eine Aluminiumlegierung, eine Nickellegierung oder eine Stahllegierung sein.

Fig. 2 zeigt einen weiteren Verfahrensschritt. Die erste Bauteilschicht 11 wurde vollständig erzeugt, wie dies anhand der Fig. 1 beschrieben wurde, wobei das Metallmaterial M der ersten Bauteilschicht 11 insbesondere in einem erstarrten Zustand vorliegt. Wie in Fig. 2 gezeigt ist, liegt die erste Bauteilschicht 11 mit einer unteren Oberfläche 11b an der Oberfläche 2a der Trägerplatte 2, welche im vorangegangenen Verfahrensschritt die Basisoberfläche 10 gebildet hat, an. Eine Außenoberfläche 11a der ersten Bauteilschicht 11 ist entgegengesetzt zu der unteren Oberfläche 11b bzw. zu der Oberfläche 2a der Trägerplatte 2 und damit zur Basisoberfläche 10 gelegen.

Fig. 2 zeigt das Einbringen von Scherspannungen in die erste Bauteilschicht 11.

Wie in Fig. 2 schematisch dargestellt, erfolgt das Einbringen von Scherspannungen mittels eines Reibstifts 3. Der Reibstift 3 wird hierbei um eine quer zu der Außenoberfläche 11a der ersten Bauteilschicht 11 verlaufende Drehsachse A rotiert und mit einer vorbestimmten Kraft F an die erste Bauteilschicht 11 angedrückt. Gleichzeitig wird der Reibstift 3 mittels des Manipulators 102 entlang der Außenoberfläche 11a der Bauteilschicht 11 bewegt, wie dies in Fig. 2 symbolisch durch den Pfeil P2 dargestellt ist. Wie in Fig. 2 erkennbar ist, ist die Kraft F entlang der Drehachse A gerichtet. Fig. 3 zeigt eine Draufsicht auf die erste Bauteilschicht 11 während dieses Verfahrensschritts. In Fig. 3 ist ein bereits mittels des Reibstifts 3 mechanisch bearbeiteter Bereich der Außenoberfläche 11a der Bauteilschicht 11 gepunktet dargestellt und ein noch zu bearbeitender Bereich ist als helle Fläche dargestellt. Der Reibstift 3 wird demnach entlang der gesamten Außenoberfläche 11a der Bauteilschicht 11 bewegt bzw. die Bauteilschicht 11 wird mittels des Reibstifts 3 vollflächig mechanisch bearbeitet. Die Kraft F, mit welcher der Reibstift 3 an die Außenoberfläche 11a angedrückt wird, kann insbesondere in einem Bereich zwischen 0,5 Kilonewton und 10 Kilonewton liegen. Eine Drehzahl, mit welcher der Reibstift 3 um die Drehachse A rotiert wird, wie dies in Fig. 3 durch den Pfeil P3 symbolisch dargestellt ist, kann insbesondere in einem Bereich zwischen 100 Umdrehungen pro Minute und 10000 Umdrehungen pro Minute liegen.

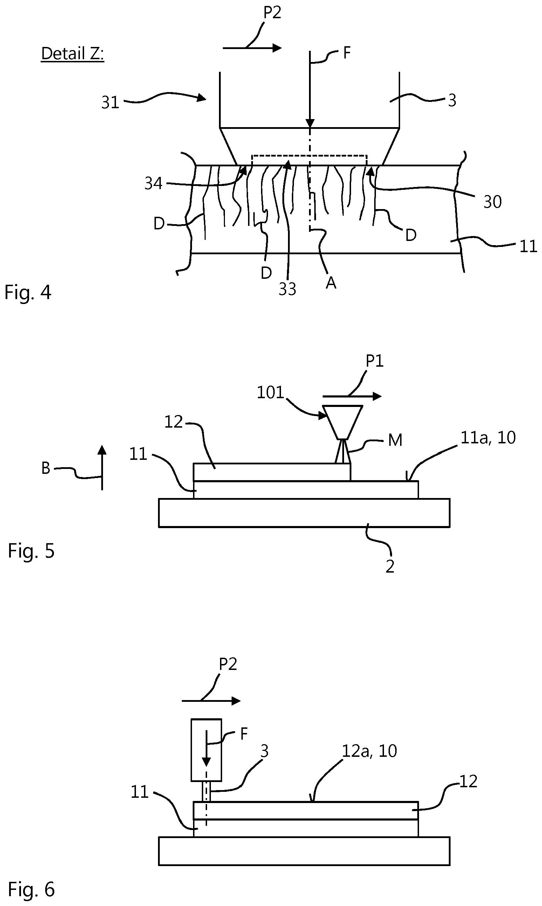

Wie in Fig. 4 schematisch dargestellt ist, führt das Einbringen von Scherspannungen mittels des rotierenden Reibstifts 3 zur Ausbildung von Versetzungen D im Metallmaterial M der ersten Bauteilschicht 11, was von großem Vorteil für das weitere Herstellungsverfahren ist, insbesondere im Hinblick auf die mechanische Festigkeit des Bauteils 1. Dies wird im Folgenden noch im Detail erläutert.

Wie in den Fig. 2 und 4 gezeigt, wird der Reibstift 3 derart an die Außenoberfläche 11a der ersten Bauteilschicht 11 angedrückt, dass die Drehachse A des Reibstifts 3 quer zu der Außenoberfläche 11a verläuft. Wie insbesondere in Fig. 4 dargestellt ist, weist der Reibstift 3 an einem ersten Endabschnitt 31 eine Stirnfläche 30 auf, welche an die Außenoberfläche 11a der Bauteilschicht 11 angedrückt wird.

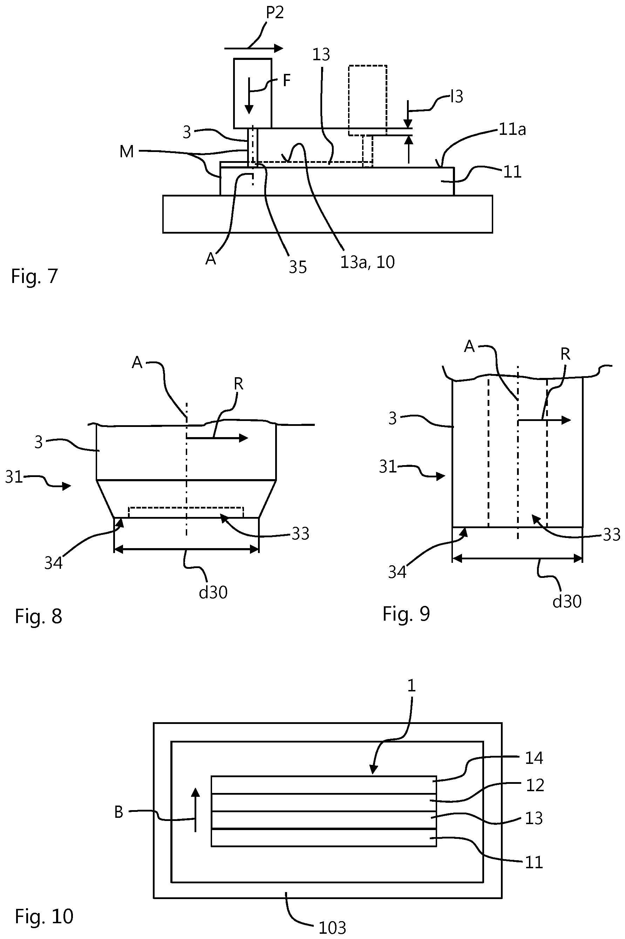

Wie in den Fig. 8 und 9 im Detail dargestellt ist, erstreckt sich die Stirnfläche 30 quer zu Drehachse A. In Bezug auf eine sich senkrecht zur Drehachse R erstreckende radiale Richtung R, weist die Stirnfläche 30 einen Durchmesser d30 auf, der insbesondere in einem Bereich zwischen 1 mm und 10 cm liegen kann.

Wie in Fig. 8 weiterhin dargestellt, kann sich ein Durchmesser des Reibstiftes 3 entlang der Drehachse D zu der Stirnfläche 30 hin verjüngen. In Fig. 8 ist beispielhaft eine konische Verjüngung dargestellt. Selbstverständlich kann die optionale Verjüngung auch anders, beispielsweise sphärisch oder parabolisch realisiert sein.

Die Fig. 8 und 9 zeigen weiterhin, dass der Reibstift 3 an der Stirnfläche 30 eine Ausnehmung 33 aufweist. Die Ausnehmung 33 kann insbesondere konzentrisch um die Drehachse D ausgebildet sein. Ferner ist die Ausnehmung 33 von einem Anlagebereich 34 umgeben. Wie in Fig. 8 gezeigt ist, kann die Ausnehmung 33 als Vertiefung der Stirnfläche 30 ausgebildet sein. Alternativ kann die Ausnehmung 33 auch als eine den Reibstift 3 entlang der Rotationsachse D insgesamt durchdringende Durchgangsöffnung ausgebildet sein, wie dies in Fig. 9 schematisch dargestellt ist. Erfindungsgemäß ist der Anlagebereich 34 der Stirnfläche 30, wie in den Fig. 8 und 9 beispielhaft dargestellt, ringförmig ausgebildet. Vorzugsweise umschließt der Anlagebereich 34 die Drehachse D konzentrisch.

In Fig. 4 ist beispielhaft ein Reibstift 3 mit einer als Vertiefung ausgebildeten Ausnehmung 33 und einem diese bzw. die Drehachse D konzentrisch umschließenden ringförmigen Anlagebereich 33 dargestellt, welcher mit der Kraft F an die Außenoberfläche 11a der Bauteilschicht 11 angedrückt wird und um die Drehachse D rotiert, um Versetzungen D in die Bauteilschicht 11 einzubringen.

Fig. 5 zeigt einen weiteren Schritt des Verfahrens. Hierbei wird eine weitere, zweite Bauteilschicht 12 auf der Außenoberfläche 11a der ersten Bauteilschicht 11 erzeugt, wie dies anhand der Fig. 1 beschrieben wurde. In diesem Schritt bildet somit nicht mehr die Oberfläche 2a der Trägerplatte 2 die Basisschicht 10, sondern die Basisschicht 10 wird durch die mittels des Reibstifts 3 mechanisch bearbeitete Außenoberfläche 11a der ersten Bauteilschicht 11 gebildet.

Die Versetzungen D, welche in dem vorangehenden Verfahrensschritt mittels des rotierenden Reibstifts 3 erzeugt wurden, verbessern insbesondere die Wärmeableitung des Metallmaterials M, aus welchem die zweite Bauteilschicht 12 hergestellt wird. Darüber hinaus hemmen die Versetzungen jedoch ein Kristallwachstum infolge des Wärmeeintrags in erste Bauteilschicht 11, welche aus der Herstellung der zweiten Bauteilschicht 12 auf der als Basisfläche 10 dienenden Außenoberfläche 11a der ersten Bauteilschicht 11 herrührt.

Optional kann wie in Fig. 6 dargestellt auch die zweite Bauteilschicht 12 mittels des rotierenden Reibstifts 3 mechanisch bearbeitet werden, wie dies anhand der Fig. 2 bis 4 beschrieben wurde. Weiter optional kann danach eine weitere Bauteilschicht (nicht dargestellt) auf der zweiten Bauteilschicht 12, insbesondere auf deren entgegengesetzt zu der ersten Bauteilschicht 11 gelegenen Außenoberfläche 12a, hergestellt werden, wie voranstehend beschrieben. Die Außenoberfläche 12a der zweiten Bauteilschicht 12 dient dabei als Basisoberfläche 10.

Allgemein kann auf diese Weise ein Bauteil 1 mit einer Vielzahl von Bauteilschichten hergestellt werden, wobei nach der Herstellung jeweils einer Bauteilschicht eine mechanische Bearbeitung der Außenoberfläche der zuletzt hergestellten Bauteilschicht mittels des rotierenden Reibstifts 3 erfolgt.

Fig. 7 zeigt schematisch eine Variante des Schritts der Einbringung von Scherspannungen in die Bauteilschicht 11. Hierbei ist der Reibstift 3 aus demselben Metallmaterial M ausgebildet wie die Bauteilschicht 11. Die Kraft F, mit welcher der Reibstift 3, insbesondere dessen Stirnfläche 30, an die Außenoberfläche 11a der Bauteilschicht 11 angedrückt wird, ist hierbei derart groß gewählt, dass das Metallmaterial M des Reibstifts 3 in einem Kontaktbereich 35 mit der Außenoberfläche 11a der Bauteilsicht 11 infolge der resultierenden Reibungswärme plastifiziert wird. Durch die Bewegung des Reibstifts 3 entlang der Außenoberfläche 11a der Bauteilschicht 11 unter Wirkung der Kraft F wird das Metallmaterial M des Reibstifts 3 von diesem abgetragen und lagert sich als Materialschicht 13 auf der Außenoberfläche 11a der Bauteilschicht 11 ab. Der Reibstift 3 wird dabei entlang seiner Drehachse D abgetragen bzw. verbraucht. In Fig. 7 zeigt die gestrichelte Darstellung den Reibstift 3 zu einem späteren Zeitpunkt, an welchem bereits ein Teil der Außenoberfläche 11a der ersten Bauteilschicht 11 mechanisch bearbeitet wurde, als die Darstellung des Reibstifts 3 in voller Linie. Wie an der gestrichelten Darstellung erkennbar ist, wurde der Reibstift 3 bereits um eine Länge I3 entlang der Drehachse D abgetragen bzw. abgerieben. Dieser Materialabrieb bildet die Materialschicht 13. Eine entgegengesetzt zu der ersten Bauteilschicht 11 gelegene Oberfläche 13a der Materialschicht 13 bildet eine Basisoberfläche 10 für die Herstellung einer weiteren Bauteilschicht 12, wie dies oben beschrieben wurde. Somit wird gleichzeitig mit dem Einbringen von Versetzungen in die erste Bauteilschicht 11 eine weitere Materialschicht 13 erzeugt.

Fig. 10 zeigt schematisch und beispielhaft ein Bauteil 1, welches wie voranstehend beschrieben hergestellt wurde. Das in Fig. 10 beispielhaft gezeigte Bauteil 1 weist insbesondere vier in einer Aufbaurichtung B übereinander liegende Bauteilschichten 11, 12, 13, 14. Wie in Fig. 10 beispielhaft gezeigt, wurde die in Bezug auf die Aufbaurichtung B unterste Schicht 11 wie anhand von Fig. 1 erläutert hergestellt. Danach wurde die Materialschicht 13, wie anhand von Fig. 7 erläutert mittels des rotierenden Reibstifts 3 während der Einbringung von Scherspannungen in die erste Bauteilschicht 11 hergestellt. Die Bauteilschichten 12 und 14 wurden wiederum wie anhand von Fig. 1 bzw. Fig. 5 erläutert aufgetragen, wobei zumindest die Bauteilschicht 12 wie anhand der Fig. 6 erläutert mittels des rotierenden Reibstifts 3 mechanisch bearbeitet wurde. Das in Fig. 10 beispielhaft gezeigte Bauteil 1 kann insbesondere eine L-förmige äußere Gestalt aufweisen, wie dies in Fig. 3 als Draufsicht auf die erste Materialschicht 11 dargestellt ist. Das Bauteil 1 kann insbesondere ein Strukturbauteil für ein Luft- oder Raumfahrzeug (nicht dargestellt) sein, beispielsweise ein Rumpfsegment, ein Tragflächensegment, ein Gehäusebauteil oder dergleichen.

Wie in Fig. 10 weiterhin symbolisch dargestellt, kann nach der Erzeugung der Bauteilschichten 11, 12, 13, 14 eine Wärmebehandlung durchgeführt werden. Hierzu kann das Bauteil 1 in einem schematisch dargestellten Wärmeofen 103 positioniert werden und in diesem zeitlich gesteuert entsprechend einem vorbestimmten Temperaturverlauf erwärmt werden. Aufgrund des Wärmeeintrags in die Bauteilschichten 11, 12, 13, 14 erfolgt eine Modifizierung der Kristallstruktur des Metallmaterials M der Bauteilschichten 11, 12, 13, 14. Aufgrund der mittels des rotierenden Reibstifts 3 jeweils in die Bauteilschichten 11, 12, 13, 14 eingebrachten Versetzungen führt die Wärmebehandlung zu einer sehr homogenen Kristallstruktur, wodurch die mechanische Festigkeit des Bauteils 1 erhöht wird.

Optional erfolgt abschließend eine zerspanende Bearbeitung des Bauteils, beispielsweise durch Fräsen oder Schleifen. Dies erfolgt vorzugsweise nach der optionalen Wärmebehandlung, falls eine solche durchgeführt wird.

### BEZUGSZEICHENLISTE

- 1: Bauteil
- 2: Trägerplatte
- 2a: Oberfläche
- 3: Reibstift
- 5: Rechner
- 10: Basisoberfläche
- 11: erste Bauteilschicht
- 12: zweite Bauteilschicht
- 30: Stirnfläche des Reibstifts
- 31: erster Endabschnitt des Reibstifts
- 33: Ausnehmung
- 34: Anlagebereich
- 35: Kontaktbereich
- 100: Fertigungsstation
- 101: Materialauftragsvorrichtung
- 102: Manipulator
- 103: Wärmeofen
- A: Drehachse
- B: Aufbaurichtung
- D: Versetzung
- d30: Durchmesser der Stirnfläche
- F: Kraft
- I3: Längenänderung des Reibstifts
- M: Metallmaterial
- P1-P3: Pfeil
- R: radiale Richtung

## Patentansprüche

1. Verfahren zur Herstellung eines Bauteils (1), mit folgenden Verfahrensschritten:
a) Erzeugen einer flächigen Bauteilschicht (11) auf einer Basisoberfläche (10) aus einem sich oberhalb seiner Schmelztemperatur befindlichen Metallmaterial (M);
b) Einbringen von Scherspannungen in die in Schritt a) erzeugte Bauteilschicht (11) mittels eines um eine Drehachse (A) rotierenden Reibstifts (3), welcher mit einer vorbestimmten Kraft (F) an eine entgegengesetzt zu der Basisoberfläche (10) gelegene Außenoberfläche (11a) der Bauteilschicht (11) angedrückt und entlang der gesamten Außenoberfläche (11a) der Bauteilschicht (11) bewegt wird, wobei die Drehachse (A) des Reibstifts (3) quer zu der Außenoberfläche (11a) der Bauteilschicht (11) verläuft und der Reibstift (3) mit einer sich quer zur Drehachse (A) erstreckenden Stirnfläche (30) an die Außenoberfläche (11a) der Bauteilschicht (11) angedrückt wird, wobei die Stirnfläche (30) im Bereich der Drehachse (A) eine Ausnehmung (33) und einen die Ausnehmung (33) umschließenden, ringförmig ausgebildeten Anlagebereich (34) aufweist, welcher an die Außenoberfläche (11a) der Bauteilschicht (11) angedrückt wird; und
c) Wiederholen von Schritt a) auf der Außenoberfläche (11a) als Basisoberfläche (10).

2. Verfahren nach Anspruch 1, wobei nach Schritt c) der Schritt b) wiederholt wird.

3. Verfahren nach Anspruch 1 oder 2, wobei der Reibstift (3) aus demselben Metallmaterial (M) ausgebildet ist wie die Bauteilschicht, und wobei die Kraft (F), mit welcher der Reibstift (3) an die Außenoberfläche (11a) der Bauteilschicht (11) angedrückt wird, derart gewählt ist, dass das Metallmaterial des Reibstifts (3) in einem Kontaktbereich (35) mit der Außenoberfläche (11a) der Bauteilschicht (11) plastifiziert und auf die Außenoberfläche (11a) der Bauteilschicht (11) aufgetragen wird.

4. Verfahren nach einem der voranstehenden Ansprüche, wobei die Kraft (F) in einem Bereich zwischen 0,5 Kilonewton und 10 Kilonewton liegt.

5. Verfahren nach einem der voranstehenden Ansprüche, wobei der Reibstift (3) mit einer Drehzahl in einem Bereich zwischen 100 Umdrehungen pro Minute und 10000 Umdrehungen pro Minute um die Rotationsachse (A) rotiert.

6. Verfahren nach einem der voranstehenden Ansprüche, wobei das Metallmaterial zur Erzeugung der Bauteilschicht (11) in einem flüssigen Zustand auf die Basisoberfläche (10) aufgetragen und dort in einen festen Zustand überführt wird.

7. Verfahren nach einem der voranstehenden Ansprüche, wobei das Metallmaterial eine Titanlegierung, eine Aluminiumlegierung, eine Nickellegierung oder eine Stahllegierung ist.

8. Verfahren nach einem der voranstehenden Ansprüche, wobei das Erzeugen der Bauteilschicht (11) mit einer Aufbaugeschwindigkeit von größer oder gleich ein Kilogramm Metallmaterial pro Stunde erfolgt.

9. Verfahren nach einem der voranstehenden Ansprüche, wobei nach der Erzeugung der Bauteilschichten (11) eine zerspanende Bearbeitung des Bauteils durchgeführt wird.

10. Verfahren nach einem der voranstehenden Ansprüche, wobei nach der Erzeugung der Bauteilschichten (11) eine Wärmebehandlung durchgeführt wird.

## Claims

1. Method for the manufacture of a component (1), with the following process steps:
a) creation of a flat component layer (11) on a base surface (10) made of a metal material (M) above its melting temperature;
b) introducing shear stresses into the component layer (11) created in step a) by means of a friction pin (3) rotating about an axis of rotation (A), which presses with a predetermined force (F) against an outer surface (11a) of the component layer (11) located opposite the base surface (10) and is moved along the entire outer surface (11a) of the component layer (11) wherein the axis of rotation (A) of the friction pin (3) extends transversely to the outer surface (11a) of the component layer (11) and the friction pin (3) is attached to the outer surface (11a) of the component layer (11) with an end face (30) extending transversely to the axis of rotation (A),
wherein the end face (30) has in the area of the axis of rotation (A) a recess (33) and a ring-shaped contact area (34) which surrounds the recess (33) and which is pressed to the outer surface (11a) of the component layer (11); and
c) repeat step a) on the outer surface (11a) as base surface (10).

2. Method according to claim 1, wherein after step c) step b) is repeated.

3. Method according to claim 1 or 2, wherein the friction pin (3) is made of the same metal material (M) like the component layer, and wherein the force (F), with which the friction pin (3) is pressed against the outer surface (11a) of the component layer (11), is selected such that the metal material of the friction pin (3) plasticizes in a contact region (35) with the outer surface (11a) of the component layer (11) and is applied to outer surface (11a) of the component layer (11) is applied.

4. Method according to one of the foregoing claims, wherein the force (F) is in a range between 0.5 kilonewtons and 10 kilonewtons.

5. Method according to one of the foregoing claims, wherein the friction pin (3) rotates around the rotation axis (A) at a speed in a range between 100 revolutions per minute and 10000 revolutions per minute.

6. Method according to one of the foregoing claims, wherein the metal material for producing the component layer (11) is applied to the base surface (10) in a liquid state and converted there into a solid state.

7. Method according to one of the foregoing claims, wherein the metal material is a titanium alloy, an aluminium alloy, a nickel alloy or a steel alloy.

8. Method according to one of the foregoing claims, wherein the generation of the component layer (11) takes place at a build-up speed of greater than or equal to one kilogram of metal material per hour.

9. Method according to one of the foregoing claims, wherein next to the generation of the component layers (11), a machining process is carried out on the component.

10. Method according to one of the foregoing claims, wherein next to the generation of the component layers (11) a heat treatment is carried out.

## Revendications

1. Méthode de fabrication d'un composant (1), comprenant les éléments suivants les étapes du processus :
a) produire une couche de composants plane (11) sur une surface de base (10) à partir d'un matériau métallique (M) au-dessus de sa température de fusion ;
b) l'introduction de contraintes de cisaillement dans le couche de composants (11) au moyen d'une broche de friction (3) tournant autour d'un axe de rotation (A), qui presse avec une force prédéterminée (F) contre une surface extérieure (11a) de la couche de composants (11) située à l'opposé de la surface de base (10) et
sur toute la surface extérieure (11a) de la couche de composants (11) dans lequel l'axe de rotation (A) de la tige de friction (3) s'étend transversalement à la surface extérieure (11a) de la couche de composants (11) et la tige de friction (3) est reliée à la surface extérieure (11a) de la couche de composants (11) par une face frontale (30) s'étendant transversalement à l'axe de rotation (A) est pressée, la face frontale (30) étant pressée dans la zone de l'axe de rotation (A) présente un évidement (33) et une zone de contact (34) de forme annulaire qui entoure l'évidement (33) et est reliée à la surface extérieure (11a) de la couche constitutive (11) est pressée ; et
c) répéter l'étape a) sur la surface extérieure (11a) comme surface de base (10).

2. Méthode selon la revendication 1, dans laquelle, après l'étape c), l'étape b) est répétée.

3. Méthode selon la revendication 1 ou 2, dans lequel la tige de friction (3) est faite de la même le matériau métallique (M) est formé comme la couche constitutive, et dans lequel la force (F), avec laquelle la tige de friction (3) est pressée contre la surface extérieure (11a) de la couche de composants (11), est choisie de telle sorte que le matériau métallique de la tige de friction (3) se plastifie dans une zone de contact (35) avec la surface extérieure (11a) de la couche de composants (11) et est appliqué sur la surface extérieure (11a) de la couche de composants (11) est appliquée.

4. Méthode selon l'une des revendications ci-dessus, dans laquelle la force (F) se situe dans une plage comprise entre 0,5 kilonewtons et 10 kilonewtons.

5. Méthode selon l'une des revendications ci-dessus, dans laquelle la goupille de friction (3) tourne autour de l'axe de rotation (A) à une vitesse comprise entre 100 tours par minute et 10000 tours par minute.

6. Méthode selon l'une des revendications précédentes, dans laquelle le matériau métallique servant à produire la couche de composants (11) est appliqué à l'état liquide sur la surface de base (10) et y est transformé en état solide.

7. Méthode selon l'une des revendications ci-dessus, dans laquelle le matériau métallique est un alliage de titane, un alliage d'aluminium, un alliage de nickel ou un alliage d'acier.

8. Méthode conforme à l'une des revendications précédentes, dans lequel la production de la couche de composants (11) à un taux d'accumulation supérieur ou égal à est égal à un kilogramme de matériau métallique par heure.

9. Méthode selon l'une des demandes précédentes, en vertu de laquelle, selon la génération des couches de composants (11), une opération d'usinage est effectuée sur le composant.

10. Méthode selon l'une des revendications ci-dessus, selon laquelle, selon la génération des couches de composants (11), un traitement thermique est effectué.
